# EUROPÄISCHE PATENTANMELDUNG

(11) **EP 3 150 420 A1**
(43) Veröffentlichungstag der Anmeldung: **05.04.2017**
(21) Anmeldenummer: 15187683.6
(22) Anmeldetag: 30.09.2015
(51) Int. Cl.: B60L 9/16, B60L 7/06, B60L 7/08, H02P 5/00

(54) **GRUPPENANTRIEB FÜR FAHRZEUGE**

(71) Anmelder: Siemens Aktiengesellschaft, 80333 München (DE)
(72) Erfinder: Laska, Bernd, 91074 Herzogenaurach (DE)

(57) **Zusammenfassung**

Die Erfindung betrifft einen elektrischen Antrieb (1) für ein Fahrzeug (2), mit mindestens zwei Motoren (10,11) und einem zentralen Umrichter (3), wobei die Motoren (10,11) jeweils eine Ständerwicklung (15), eine Läuferwicklung (16) und eine Antriebswelle (17) aufweisen, wobei die Antriebswellen (17) der Motoren (10,11) mechanisch über einen Fahrweg (5) miteinander koppelbar sind, wobei der zentrale Umrichter (3) mit den Ständerwicklungen (15) der Motoren (10,11) elektrisch verbunden ist. Zur Verbesserung des elektrischen Antriebs (1) wird vorgeschlagen, den elektrischen Antrieb um mindestens einen dezentralen Umrichter (4) zu ergänzen und den dezentralen Umrichter (4) mit der Läuferwicklung (16) eines ersten Motors (11) der mindestens zwei Motoren (10,11) elektrisch zu verbinden. Die Erfindung betrifft weiter ein Fahrzeug (2), insbesondere ein Schienenfahrzeug, mit einem solchen elektrischen Antrieb (1). Ferner betrifft die Erfindung ein Verfahren zum Betreiben eines solchen elektrischen Antriebs (1), wobei zur Steuerung oder Regelung des Momentes des ersten Motors (11) mittels des dezentralen Umrichters (4), der mit dem ersten Motor (11) elektrisch verbunden ist, eine Spannung an die Läuferwicklung (16) des ersten Motors (11) angelegt wird.

## Beschreibung

Die Erfindung betrifft einen elektrischen Antrieb für ein Fahrzeug mit mindestens zwei Motoren und einem zentralen Umrichter, wobei die Motoren jeweils eine Ständerwicklung, eine Läuferwicklung und eine Antriebswelle aufweisen und wobei die Antriebswellen der Motoren mechanisch über einen Fahrweg miteinander koppelbar sind. Die Erfindung betrifft weiter, ein Fahrzeug mit einem solchen elektrischen Antrieb sowie ein Verfahren zum Betreiben eines solchen elektrischen Antriebs.

Der elektrische Antrieb des Fahrzeugs, auch als Traktionsantrieb bezeichnet, dient dazu, das Fahrzeug zu beschleunigen und zu verzögern. Im Folgenden wird die Beschleunigung des Fahrzeuges beschrieben. Der Bremsbetrieb ist dabei mit eingeschlossen ohne explizit genannt zu werden. Schienenfahrzeuge, insbesondere elektrische Triebzüge, benötigen für eine gute Kraftschlussausnutzung verteilte Antriebssysteme. Darunter versteht man, dass die Antriebsleistung derart auf mehrere Achsen verteilt wird, dass eine hohe Beschleunigung erreicht werden kann, ohne dass ein Rad oder eine Achse zum Durchdrehen neigt oder sogar durchdreht. Die Konzentration der Zugkraft auf eine oder wenige Achsen würde, z.B. bei witterungsbedingten schlechten Schienenverhältnissen, eine deutliche Reduzierung der betrieblich nutzbaren Zugkraft erfordern. Bei Triebzügen ist es deshalb heute üblich, Motorisierungsgrade (Anzahl der angetriebenen Achsen im Verhältnis zur Gesamtanzahl der Achsen) von z.B. 50% bis 100% zu verwenden.

Dazu kommen beispielsweise Antriebssysteme mit Asynchronmotoren mit Rotoren mit Käfigwicklung zum Einsatz. Die für die Versorgung der Motoren mit elektrischer Energie erforderlichen Umrichter sind im Zugverband verteilt eingebaut und speisen 1 bis 4 Asynchronmotoren. Wenn mehrere Motoren von einem Umrichter gespeist werden, bezeichnet man diesen Antrieb auch als Gruppenantrieb. Die Baugröße der Umrichter richtet sich unter anderem nach der Leistung der zu versorgenden Motoren. Nur bei der Speisung eines Motors von einem ihm zugeordneten Umrichter, auch als Einzelachsantrieb oder 1C1M (1 Converter, 1 Motor), kann die Motorleistung vollständig genutzt werden, da dieser Motor individuell regelbar ist. Daher können die Raddurchmesser der mit diesem Motor angetriebenen Achsen große Toleranzen besitzen ohne sich negativ auf den Antrieb des Fahrzeugs auszuwirken. Bei der Parallelschaltung von Asynchronmotoren (1C2M ... 1C4M), auch als Gruppenantrieb bezeichnet, müssen die Raddurchmesser der angetriebenen Achsen derjenigen Motoren, die durch den gleichen Umrichter gespeist werden, auf ca. 0,5 bis 1% des Raddurchmessers angeglichen werden, um eine zu starke Abweichung der Momente zwischen den Motoren zu vermeiden.

Die Antriebskonfiguration 1C1M ist wegen des hohen Umrichter- und Steuerungsaufwand mit hohen Anschaffungskosten verbunden. Der Parallelbetrieb von Asynchronmaschinen (beispielsweise 1C2M, 1C3M, 1C4M etc.) führt wegen des erforderlichen Angleichens von Raddurchmessern zu hohen Wartungskosten.

Alternativ kommen in Fahrzeugen Antriebssysteme mit Synchronmotoren, insbesondere permanenterregte Synchronmotoren, zum Einsatz. Dabei speist ein Umrichter jeweils einen Synchronmotor. Da das Moment eines Synchronmotors von seinem Polradwinkel abhängt und die Fahrmotordrehzahl in einem festen Verhältnis mit der Achsdrehzahl steht, ist eine Parallelschaltung von mehreren Synchronmotoren an einen Umrichter nicht möglich. Deshalb besitzt dieses Antriebssystem mit permanenterregten Motoren die gleichen oben genannten Nachteile bezüglich hoher Anschaffungskosten wie der Einzelachsantrieb (1C1M) mit Asynchronmotoren.

Ein weiterer Nachteil der genannten Antriebe besteht darin, dass der Einbauraum in der Nähe der durch die Umrichter zu versorgenden Motoren meist sehr gering ist. Der Platzbedarf der Umrichter schränkt die Gestaltung der Fahrzeuge wesentlich ein. Bekannte Merkmale hierfür sind die heutigen hohen Belegungsdichten der Unterflur- oder Dachbereiche mit Antriebskomponenten, die komplexen Energieverteilungssystemen zwischen den Traktionsausrüstungen, aufwendige verteilte leistungsstarke Kühlsysteme mit negativem Einfluss auf den Fahrwiderstand der Fahrzeuge und die Schwierigkeit, Doppelstocktriebzüge zur Erzielung hoher Beförderungskapazität zu realisieren.

Entsprechendes gilt für die Einzelradantriebe von Fahrzeugen, insbesondere Kraftfahrzeugen, bei denen jeweils ein Rad durch einen Motor gespeist wird. Auch bei diesen Antrieben erfolgt die Unterbringung der Antriebskomponenten, insbesondere des Umrichters, in der Nähe des Rades, wo der verfügbare Einbauraum entsprechend gering ist.

Der Erfindung liegt die Aufgabe zugrunde, den elektrischen Antrieb für ein Fahrzeug insbesondere im Hinblick auf die Integration in ein Fahrzeug zu verbessern.

Die Aufgabe wird durch einen elektrischen Antrieb für ein Fahrzeug mit mindestens zwei Motoren, einem zentralen Umrichter und mindestens einem dezentralen Umrichter gelöst, wobei die Motoren jeweils eine Ständerwicklung, eine Läuferwicklung und eine Antriebswelle aufweisen, wobei die Antriebswellen der Motoren mechanisch über einen Fahrweg miteinander koppelbar sind, wobei der zentrale Umrichter mit den Ständerwicklungen der Motoren elektrisch verbunden ist, wobei der dezentrale Umrichter mit der Läuferwicklung eines ersten Motors der mindestens zwei Motoren elektrisch verbunden ist. Darüber hinaus wird die Aufgabe durch ein Fahrzeug, insbesondere ein Schienenfahrzeug, mit einem solchen elektrischen Antrieb gelöst.

Ferner wird die Aufgabe durch ein Verfahren zum Betreiben eines solchen elektrischen Antriebs gelöst, wobei zur Steuerung oder Regelung des Momentes des ersten Motors mittels des dezentralen Umrichters, der mit dem ersten Motor elektrisch verbunden ist, eine Spannung an die Läuferwicklung des ersten Motors angelegt wird.

Weitere Ausgestaltungen der Erfindung sind in den abhängigen Ansprüchen angegeben.

Der Erfindung liegt die Erkenntnis zugrunde, dass sich der elektrische Antrieb dadurch verbessern lässt, dass sich eine Steuerung/Regelung eines Motors in einer Gruppe von Motoreneines Fahrzeugs, insbesondere eines Schienenfahrzeugs, dadurch erzielen lässt, dass die Ständerwicklungen der Gruppe von Motoren über einen zentralen Umrichter gespeist werden und darüber hinaus die Läuferwicklung des zu steuernden/regelnden Motors mit einem dezentralen Umrichter verbunden ist. Durch die Vorgabe einer Spannung durch den dezentralen Umrichter an die Läuferwicklung des Motors, insbesondere einer frequenzvariabler Spannung bei der Verwendung von Drehstrommotoren, lässt sich das Moment dieses Motors unabhängig von den anderen Motoren regeln, die mit dem gleichen zentralen Umrichter elektrisch verbunden sind. Die Spannung des zentralen Umrichters richtet sich dabei in vorteilhafter Weise im Wesentlichen nach der Fahrzeuggeschwindigkeit oder dem Gesamtmoment, das durch den Antrieb des Fahrzeugs aufzubringen ist. Durch eine Spannung an der Läuferwicklung mit geeigneter Frequenz, Amplitude und Phasenlage kann das Moment des Motors variiert werden. Da die einzelnen Motoren über eigene dezentrale Umrichter verfügen, kann das Moment der einzelnen Motoren unabhängig voneinander gesteuert oder geregelt werden. Bei Schienenfahrzeugen ist damit eine Einzelachssteuerung erreichbar. Es hat sich als vorteilhaft erwiesen, die Anschlüsse der Läuferwicklung aus dem Innern mittels Schleifringe an das Gehäuse des Motors nach außen zu führen. Eine andere Lösung besteht darin, die Läuferwicklung des Antriebsmotors über eine asynchrone Erregermaschine zu speisen.

Es hat sich als besonders vorteilhaft erwiesen, als Motoren den Einsatz von Asynchronmotoren mit Schleifringläufern vorzusehen, die ständerseitig mit anderen Motoren zu einer Antriebsgruppe parallel geschaltet und von einem zentralen Umrichter mit einem frequenzvariablen Spannungssystem versorgt werden. Die Einzelachssteuerung wird durch eine Läuferspeisung des Motors erreicht. Dabei richtet sich die Frequenz des Drehspannungssystems, das den Läufer speist, nach dem Schlupf des Asynchronmotors und der Toleranz der Raddurchmesser in der Antriebsgruppe.

Es hat sich als vorteilhaft erwiesen, dass der elektrische Antrieb mehrere oder eine Vielzahl von dezentralen Umrichtern aufweist. Damit können mehrere Motoren oder eine Vielzahl von Motoren als erste Motoren ausgebildet sein. Diese ersten Motoren haben die Eigenschaft, dass ihre Läuferwicklung jeweils mit einem der dezentralen Umrichter verbunden ist. Somit ist die Anzahl der dezentralen Umrichter gleich der Anzahl der ersten Motoren. Stattet man den elektrischen Antrieb eines Fahrzeugs derart aus, dass alle Motoren bis auf einen jeweils mit einem dezentralen Umrichter verbunden sind, so ist das Moment aller Motoren regelbar/steuerbar. Das Drehmoment des Motors, der über keinen angeschlossenen dezentralen Umrichter verfügt, kann über den zentralen Umrichter gesteuert werden. Während die Regelung/Steuerung des Moments der ersten Motoren durch den angeschlossenen dezentralen Umrichter erfolgt. Somit ist auch in dieser Anordnung das Moment aller Motoren steuer- bzw. regelbar. Als besonders günstig hat es sich erwiesen, alle Motoren mit ihrer Läuferwicklung mit einem dezentralen Umrichter zu verbinden. Aus Symmetriegründen können alle Antriebe als erste Motoren ausgeführt und mit einem dezentralen Umrichter versehen werden.

Bei dem erfindungsgemäßen elektrischen Antrieb wird der Großteil der Leistung über den zentralen Umrichter an die Motoren übertragen. Nur ein geringer Anteil der elektrischen Leistung erfolgt über den dezentralen Umrichter. Aus diesem Grund ist der dezentrale Umrichter relativ klein und kann auf einfache Wiese in den zur Verfügung stehenden Einbauraum in der Nähe des Motors integriert werden.

Die Leistung des dezentralen Umrichters richtet in vorteilhafter Weise sich nach dem Schlupf der Asynchronmotoren und den Toleranzen der Räder. Bei einem elektrischen Antrieb mit Asynchronmotoren und einer Schlupffrequenz von kleiner 1% und einer maximalen Toleranz zwischen den Raddurchmessern von ca. 5% beträgt die Umrichterleistung des dezentralen Umrichters zur Läuferspeisung ca. 6% der Traktionsleistung. Damit ist der dezentrale Umrichter besonders klein herstellbar, so dass dieser problemlos in bestehenden Einbauraum integriert werden kann.

Dieser elektrische Antrieb ist für Asynchronmotoren realisierbar, die eine separate Speisung der Läuferwicklung erlauben. Hierzu zählen Asynchronmotoren mit einer Drehstromwicklung, die über Schleifringe versorgt werden kann oder Asynchronmotoren mit einer läuferseitigen Drehstromwicklung, die über eine Erregermaschine gespeist werden kann. Dabei kann der elektrische Antrieb nur eine Art von Motoren aufweisen oder auch unterschiedliche Arten von Motoren in einem elektrischen Antrieb miteinander kombinieren.

Dabei hat es sich als vorteilhaft erwiesen, dass der zentrale Umrichter einen Frequenzbereich von wenigen Hz im Anfahrpunkt bis hin zu mehreren 100 Hz Grundfrequenz bei maximaler Fahrzeuggeschwindigkeit umfasst.

Für den Einsatz ist es unerheblich, ob, wie beispielsweise in einem Kraftfahrzeug üblich, ein Motor des elektrischen Antriebs ein Rad antreibt oder, wie beispielsweise in einem Schienenfahrzeug üblich, eine Achse oder Welle durch einen Motor des elektrischen Antriebs angetrieben wird.

Bei einem Schienenfahrzeug kann sich der elektrische Antrieb über das gesamte Fahrzeug oder über einen Wagen des Schienenfahrzeugs erstrecken. Es können dann alle Wagen oder nur ein Teil des Wagens des Zuges mit dem elektrischen Antrieb ausgestattet sein.

Der Einsatz eines oder mehrerer zentralen Umrichter mit einer ihr zugeordneten Antriebsgruppe ist möglich.

Bei einer vorteilhaften Ausgestaltung der Erfindung sind die Ständerwicklungen der Motoren in einer Parallelschaltung angeordnet und mit dem zentralen Umrichter elektrisch verbunden. Damit steht an allen Ständerwicklungen der Motoren die durch den zentralen Umrichter erzeugte Spannung an. Wenn die Motoren baugleich sind, ist gewährleistet, dass sich die Momente der Motoren ohne Energieeinspeisung durch die dezentralen Umrichter bei kurzgeschlossenem Läufer bereits nahezu gleich sind bzw. keine großen Unterschiede aufweisen. Damit können die dezentralen Stromrichter, mit denen sich die Momente der einzelnen Motoren variieren lassen, besonders klein und kompakt ausgestaltet sein. Darüber hinaus lassen sich die Ständerwicklungen der Motoren des Antriebs auf einfache Weise, beispielsweise mittels einer Sammelschiene, miteinander verbinden.

Bei einer weiteren vorteilhaften Ausgestaltung der Erfindung ist die Anzahl der dezentralen Umrichter gleich der Anzahl der Motoren, wobei die Motoren des elektrischen Antriebs derart als erste Motoren ausgebildet sind, dass die Läuferwicklungen der Motoren jeweils mit einem der dezentralen Umrichter verbunden sind. In dieser Ausgestaltung weist der Antrieb eine erste Anzahl an dezentralen Umrichter und eine zweite Anzahl an ersten Motoren auf, wobei die erste Anzahl und die zweite Anzahl gleich sind. Damit ist das Moment aller ersten Motoren unabhängig voneinander durch die dezentralen Umrichter steuerbar bzw. regelbar. Dabei können einige, mehrere oder alle Motoren des elektrischen Antriebs als erste Motoren ausgebildet sein. Diese sind einzeln steuerbar bzw. regelbar, so dass unterschiedliche Einflüsse, wie beispielsweise unterschiedliche Raddurchmesser, unterschiedlicher Kraftschluss zwischen Rad und Fahrweg durch die Regelung berücksichtigt und/oder ausgeglichen werden kann. In dieser Ausgestaltung hat der Aufbau zudem eine komplett symmetrische Struktur, was die Implementierung einer Regelung zur Vorgabe von Momenten der einzelnen Motoren erleichtert. Durch die gleichartigen Motoren mit jeweils einem entsprechenden dezentralen Umrichter kann eine Ersatzteilhaltung aufgrund fehlender Varianten zudem besonders einfach und kostengünstig erfolgen.

Bei einer weiteren vorteilhaften Ausgestaltung ist zumindest der erste Motor als Asynchronmotor mit Schleifringläufer ausgebildet. Diese Art von Motor ist kostengünstig und zuverlässig verfügbar, bei dem die Läuferwicklung über Schleifringe nach außen geführt wird. Ebenso lässt sich die Regelung von Asynchronmotoren auf einfache Weise realisieren. Mit dem dezentralen Umrichter lässt sich direkt Einfluss nehmen auf den Schlupf des an diesen dezentralen Umrichter angeschlossen Motors, um dessen Drehmoment zu beeinflussen, zu steuern oder zu regeln. Bei den Asynchronmotoren kann die Steuerung und/oder Regelung auf einfache Weise in Abhängigkeit vom Schlupf des Asynchronmotors vorgenommen werden.

Bei einer weiteren vorteilhaften Ausgestaltung ist zumindest der erste Motor als Asynchronmotor ausgebildet, wobei die Läuferwicklungen elektrisch mit einer Erregermaschine verbunden sind, wobei die Erregermaschine und der erste Motor starr über eine Welle oder ein Getriebe miteinander verbunden sind. Alternativ zu der Speisung der Läuferwicklung über Schleifring kann die Läuferwicklung des Motors über eine asynchrone Erregermaschine gespeist werden. Dabei wird der Läufer der Erregermaschine mit der Läuferwicklung des Motors über eine Welle oder ein Getriebe verbunden. Damit ist es möglich, Energie von der feststehenden Seite, beispielsweise vom Fahrzeug, auf die Seite des rotierenden Läufers zu übertragen. Die Ständerwicklung der Erregermaschine wird durch den dezentralen Umrichter mit einem Drehspannungssystem gespeist, das für die Drehmomentbildung im Motor eine geeignete Läuferfrequenz erzeugt.

Über die Phasenlage, Amplitude und Frequenz kann vergleichbar wie bei der Speisung über Schleifringe auch über die gekoppelte Erregermaschine das Drehmoment des Motors geregelt werden. Die Speisung über eine separate Erregermaschine führt zu den gleichen Vorteilen wie bei der Speisung über Schleifringe. Allerdings unterscheidet sich das von den dezentralen Umrichtern zu erzeugende Drehspannungssystem in Bezug auf Frequenz, Spanungsamplitude und Phasenlage von der direkten Speisung über Schleifringe. Darüber hinaus unterliegt die Speisung mittels Erregermaschine einem geringeren Verschleiß, so dass diese Einspeisung den Vorteil von geringeren Wartungsintervallen und damit geringen Wartungskosten besitzt.

Bei einer weiteren vorteilhaften Ausgestaltung ist zum Bremsen des elektrischen Antriebs die elektrisch Verbindung zwischen dem zentralen Umrichter und dem ersten Motor trennbar, wobei die Ständerwicklung des ersten Motors mit einem Widerstand derart verbindbar ist, dass beim Anlegen einer Spannung mittels des dezentralen Stromrichters, der mit dem jeweiligen ersten Motor verbunden ist, an die Läuferwicklung des ersten Motors ein Strom zwischen der Ständerwicklung des ersten Motors und dem Widerstand fließt und ein Bremsmoment im ersten Motor bewirkt. Damit ist auf einfache Weise eine elektrische Bremse, beispielsweise auch für Asynchronmotoren, realisierbar, wie sie sonst nur für Synchronmotoren anwendbar ist. Der Vorteil besteht darin, dass die Asynchronmotoren mit Schleifringen als elektrische Bremse genutzt werden können, auch wenn die Fahrleitungsspannung oder die über den zentralen Umrichter erzeugte frequenzvariable Spannung nicht verfügbar sind. In diesem netz- und zentralumrichterunabhängigen Bremsbetrieb werden die Fahrmotoren ständerseitig von dem zentralen Umrichter getrennt und die Ständerwicklungen auf dreiphasige Widerstände geschaltet. Die Fahrmotoren werden in dieser Betriebsart über die läuferseitig angeschlossenen dezentralen Umrichter erregt. Das damit erzeugte Drehfeld im Motor induziert in der Ständerwicklung eine Spannung. Die angeschalteten Widerstände führen die Bremsenergie an die Umgebung in Form von Wärme ab.

Als besonders vorteilhaft hat sich diese Möglichkeit des Bremsens für Asynchronmotoren bei Schienenfahrzeugen erwiesen. Für ein sicheres Bremsen ist die Funktion des zentralen Umrichters nicht mehr zwingend erforderlich. Die erforderliche Redundanz für das sichere Bremsen wird über die Anzahl (mindestens zwei) dezentraler Umrichter erreicht. Damit kann auf einfache und kostengünstige Weise ein sicheres Bremsen des Schienenfahrzeugs mit hoher Redundanz sichergestellt werden.

Dabei können für jeden ersten Motor separate dreiphasige Bremswiderstände vorgesehen werden. Alternativ ist es auch möglich, mehrere erste Motoren oder alle erste Motoren zum Bremsen mit einem dreiphasigen Bremswiderstand zu verbinden.

Es hat sich als besonders vorteilhaft erwiesen, mehrere Motoren, insbesondere alle Motoren, des elektrischen Antriebs als erste Motoren auszugestalten. Wie oben beschrieben ist das elektrische Bremsen, bei dem die Bremsenergie in einem Widerstand in Wärme umgewandelt wird, nicht nur mit einem Motor sondern auch mit mehreren Motoren, insbesondere mit allen Motoren, möglich, sofern die Läuferwicklung dieser Motoren mit einem dezentralen Umrichter verbunden ist. Das Bremsmoment der einzelnen Motoren ist über die dezentralen Umrichter steuerbar/regelbar. Damit ist auch eine Aufteilung des Gesamtbremsmoments des elektrischen Antriebs auf die einzelnen Motoren steuerbar und regelbar. Aufgrund der Vielzahl der dezentralen Stromrichter verfügt diese Art des Bremsens über eine hohe Redundanz, welches die Sicherheit der Bremse erhöht. Damit kann gegebenenfalls eine zusätzliche unabhängige mechanische Bremse entfallen oder zumindest deutlich kleiner dimensioniert werden.

Bei einer weiteren vorteilhaften Ausgestaltung der Erfindung ist der zentrale Umrichter mit den Ständerwicklungen der Motoren mittels einer Sammelschiene verbunden, wobei zwischen dem zentralen Umrichter und der Sammelschiene ein Filter, insbesondere ein Gegentakt- und/oder Gleichtaktfilter, angeordnet ist. Auf diese Weise lässt sich die Versorgung der Motoren mit dem Großteil der elektrischen Energie auf einfache Weise über eine Sammelschiene realisieren. Im Falle von Asynchronmotoren oder Synchronmotoren handelt es sich im überwiegenden Fall um eine dreiphasige Sammelschiene. Da die Spannung und die Frequenz der Spannung an dieser Sammelschiene in diesem Fall veränderlich sind, wird diese auch als spannungsveränderliche Sammelschiene bezeichnet. Die Betriebsfrequenz der Sammelschiene wird in vorteilhafter Weise in Abhängigkeit von der Fahrgeschwindigkeit des Fahrzeugs gesteuert oder geregelt. Die Sammelschiene kann sich über alle oder einen Teil der Motoren des elektrischen Antriebs erstrecken. Bei einem Schienenfahrzeug können diese über den ganzen Zug oder über einen Wagen verteilt angeordnet sein. Zur Vermeidung von Störbeeinflussungen durch hochfrequente elektrische und magnetische Felder, die beispielsweise durch die Taktfrequenz des zentralen Umrichters verursacht werden, und zur Reduzierung der Verlustleistung im Motor sowie deren Pendelmomente empfiehlt sich, die Sammelschiene über ein Filter an den zentralen Umrichtern zu speisen. Aufgrund des zentralen Umrichters ist es hinreichend, nur ein Filter für den elektrischen Antrieb vorzusehen. Vorteilhafterweise wird dieses Filter als Gegentakt- und Gleichtaktfilter ausgeführt.

Bei einer weiteren vorteilhaften Ausgestaltung ist der dezentrale Umrichter zur Versorgung mit elektrischer Energie mit einem Bordnetz, insbesondere einem Gleichspannungsbordnetz, des Fahrzeugs, insbesondere eines Schienenfahrzeugs, verbindbar. Wie bereits beschrieben wird den Motoren ein Großteil der benötigten elektrischen Energie über den zentralen Umrichter zugeführt. Dieser ist daher bei einem Schienenfahrzeug direkt, ggf. unter Verwendung eines Transformators und eines Gleichrichters mit dem Fahrdraht verbunden. Der nur geringe Anteil, der durch die dezentralen Umrichter übertragen wird, kann auf einfache Weise dem Bordnetz entnommen werden, das bereits im Fahrzeug zur Speisung von Hilfsbetrieben vorgesehen ist. Das Bordnetz muss für diese Aufgabe nicht oder zumindest nicht wesentlich verändert werden, da der Energiebedarf der dezentralen Umrichter im Vergleich zum zentralen Umrichter sehr gering ist. Aufgrund des geringen Energiebedarfs, der nur wenige Prozent der Antriebsleistung beträgt, eigenen sich insbesondere auch Bordnetze mit Niederspannung.

Die Versorgung der dezentralen Umrichter besitzt vorteilhafterweise einen Energiespeicher. Hierdurch wird es möglich, die Läufer der Antriebsmaschinen unabhängig von einer Energieversorgung außerhalb des Fahrzeuges zu speisen. Diese unabhängige Energieversorgung wird insbesondere für den autarken Bremsbetrieb benötigt.

Dabei kann es sich um ein Gleichspannungsbordnetz mit beispielsweise 110 V oder ein Wechselspannungsbordnetz mit beispielsweise 230 V handeln. Bei dieser Anordnung ist es darüber hinaus möglich, mit einem oder mehreren Motoren, deren Läuferwicklung mit dem dezentralen Umrichter verbunden sind, zeitweise oder kontinuierlich, über die dezentralen Umrichter in das Bordnetz Energie einzuspeisen. Dazu bieten sich insbesondere Schwachlastzeiten an, in denen der elektrische Antrieb nicht die maximale Zugkraft aufbringen muss. Dies erhöht die Redundanz in der elektrischen Versorgung des Bordnetzes und macht damit den Ausfall von Komponenten, die aus dem Bordnetz gespeist werden, wie beispielsweise Beleuchtung oder Klimaanlage weniger wahrscheinlich. Für die Einspeisung von Energie in das Bordnetz des Fahrzeugs sind insbesondere Zeiträume geeignet, in denen das Fahrzeug rollt oder bremst.

Bei einer weiteren vorteilhaften Ausgestaltung der Erfindung ist der erste Motor mit einem ersten Rad des Fahrzeugs verbunden, wobei die Steuerung oder Regelung des Momentes des ersten Motors durch den dezentralen Umrichter in Abhängigkeit von dem Radius des ersten Rades, das mit dem ersten Motor verbunden ist, und/oder in Abhängigkeit eines Radschlupfes zwischen erstem Rad und Fahrweg erfolgt. Gleichermaßen kann ein erster Motor, insbesondere bei einem Schienenfahrzeug mit einem ersten Radsatz, aufweisend eine Achse und zwei Räder, verbunden sein. Vereinfachend erfolgt deshalb, ohne die Allgemeingültigkeit einzuschränken, die Beschreibung anhand der Ausgestaltung der Verbindung eines ersten Motors mit einem ersten Rad. Es hat sich als vorteilhaft erwiesen, für die Steuerung oder Regelung des Moments am Motor den Radius des am Motor befindlichen Rades zu berücksichtigen. Dieser ist unter anderem für eine ungleiche Aufteilung des Momentes auf die einzelnen Motoren eines Gruppenantriebs verantwortlich. So kann unabhängig vom Radradius ein Drehmoment des ersten Motors oder eine entsprechende Zugkraft zwischen Rad und Fahrweg hergestellt werden. Somit ist das Moment des Motors bei großem Radius größer als bei kleinem Radius um die gleiche Zugkraft zu erzielen. Damit lässt sich auf einfache Weise die Zugkraft zwischen Rad und Fahrweg durch den dezentralen Umrichter regeln. Mit dieser Regelung ist eine verbesserte Kraftausnutzung zwischen Rad und Schiene herstellbar. Ebenso lassen sich die Auswirkungen ungleicher Radien an unterschiedlichen Rädern, die mit unterschiedlichen Motoren verbunden sind, auf einfache Weise ausgleichen.

Darüber hinaus hat es sich als sinnvoll erwiesen, den Radschlupf zwischen Rad und Fahrweg für die Regelung zu verwenden. Bei einem Schienenfahrzeug ist der Fahrweg die Schiene. Dabei wird der Radschlupf zwischen Fahrweg und erstem Rad, das mit dem jeweiligen ersten Motor verbunden ist erfasst. Dieser lässt sich aus der Kenntnis von Fahrzeuggeschwindigkeit, Drehzahl und Radius, bzw. Durchmesser, des Rades ermitteln. Der Radschlupf steigt mit zunehmender Kraftübertragung zwischen Rad und Schiene. Anhand des Radschlupfes lässt sich das Durchdrehen eines Rades, bzw. einer angetriebenen Achse frühzeitig, beispielsweise durch steigenden Radschlupf, erkennen. Als Reaktion zur Vermeidung des Durchdrehens kann dann eine entsprechende Momentenreduktion, bzw. Umverteilung der Zugkraft des Fahrzeugs auf andere Motoren, die dann mit erhöhtem Moment betrieben werden, vorgenommen werden. Gerade bei Fahrzeugen, die eine hohe Zugkraft übertragen, wie beispielsweise Lokomotiven, unterscheidet sich die übertragbaren Kräfte der einzelnen Räder bzw. Achsen oder Wellen deutlich. Hier hat sich die Regelung in Abhängigkeit von Radschlupf als besonders günstig erwiesen.

Bei einer weiteren vorteilhaften Ausgestaltung der Erfindung ist der erste Motor als Asynchronmotor mit Schleifringläufern ausgebildet, wobei die an die Läuferwicklung des Asynchronmotors angelegte Spannung, insbesondere die Frequenz der Spannung, vom Schlupf des jeweiligen Asynchronmotor abhängt. Mit dem Schlupf kann auf einfache Weise das Moment des Asynchronmotors erfasst und geregelt werden. Es hat sich als vorteilhaft erwiesen, dass die Frequenz des Drehspannungssystems, das den Läufer speist, sich nach dem Schlupf der Asynchronmaschinerichtet.

Im Folgenden wird die Erfindung anhand der in den Figuren dargestellten Ausführungsbeispiele näher beschrieben und erläutert. Es zeigen:
- FIG 1: ein Fahrzeug mit einem elektrischen Antrieb,
- FIG 2: ein Schienenfahrzeug mit elektrischem Antrieb,
- FIG 3, FIG 4: jeweils einen elektrischen Antrieb mit einem Motor und
- FIG 5, FIG 6: jeweils einen weiteren elektrischen Antrieb mit zwei Motoren.

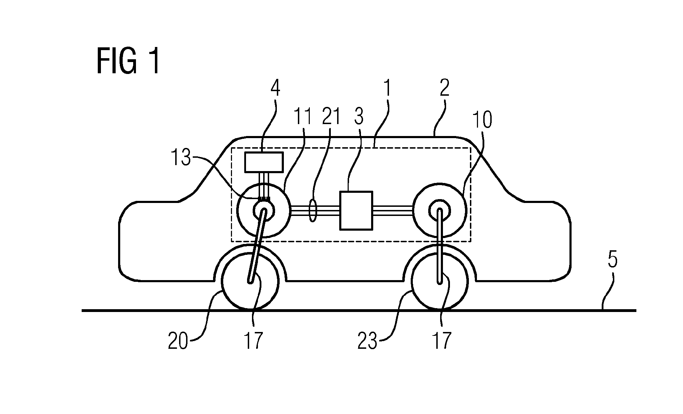

Die FIG 1 zeigt ein Fahrzeug 2 mit einem elektrischen Antrieb 1. Das Fahrzeug 2 bewegt sich auf einem Fahrweg 5. Der elektrische Antrieb 1 treibt sowohl ein erstes Rad 20 als auch ein weiteres Rad 23 des Fahrzeugs 2 über eine jeweilige Antriebswellen 17 an. Die Antriebswellen 17 übertragen das Drehmoment eines ersten Motors 11 bzw. eines weiteren Motors 10 an das erste Rad 20 bzw. das weitere Rad 23. Der Fahrweg 5 koppelt das erste Rad 20 und das weitere Rad 23 derart miteinander, dass bei der Bewegung des Fahrzeugs 2 die Antriebswellen 17 und die damit verbundenen Motoren 10, 11 gleichzeitig rotieren. Bei den hier dargestellten Motoren 10, 11 handelt es sich in diesem Ausführungsbeispiel um dreiphasige Motoren 10, 11. Die Motoren 10, 11 werden über einen zentralen Umrichter 3 mit elektrischer Energie versorgt. Dazu ist der zentrale Umrichter 3 mit den in dieser Figur nicht dargestellten Ständerwicklungen 15 der Motoren 10, 11 elektrisch verbunden. Mithilfe des zentralen Umrichters 3 ist es möglich, das Drehmoment der Motoren 10, 11 gemeinsam zu steuern oder zu regeln. Um das Drehmoment der Motoren 10, 11 unabhängig voneinander steuern oder regeln zu können, ist ein dezentraler Umrichter 4 mit dem ersten Motor 11 elektrisch verbunden. Dabei sind Anschlüsse der hier nicht dargestellten, z.B. dreiphasigen, Läuferwicklung 16 aus dem Motor über Schleifringe 13 herausgeführt. Mit diesen Anschlüssen wird der dezentrale Umrichter 4, in diesem Ausführungsbeispiel dreiphasig, verbunden. Mit dem Anlegen einer Spannung an die hier nicht dargestellte Läuferwicklung 16 kann das Drehmoment des ersten Motors 11 beeinflusst werden. Für den Fall, dass die Motoren 10, 11 in etwa das gleiche Drehmoment übertragen sollen, kann der dezentrale Umrichter 4 besonders klein und kompakt ausgeführt werden, da der Großteil der elektrischen Energie über den zentralen Umrichter 4 an die Motoren 10, 11 übertragen wird. Aus Gründen der Übersichtlichkeit wurde darauf verzichtet, die Energiequelle bzw. den Energiespeicher der den zentralen Umrichter 3 und den dezentralen Umrichter 4 elektrisch speist, darzustellen.

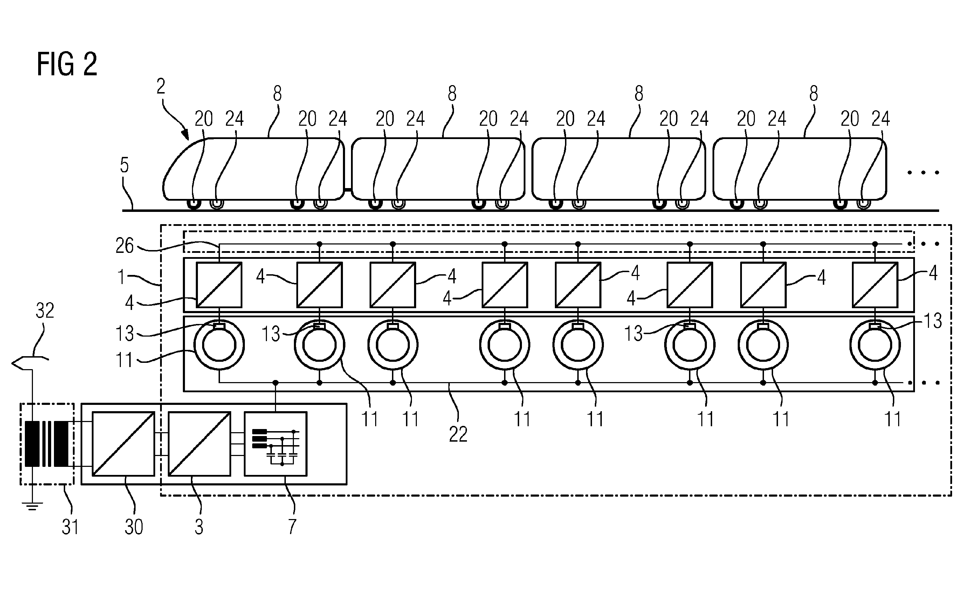

Die FIG 2 zeigt einen elektrischen Antrieb 1 eines Schienenfahrzeugs. Der Fahrweg 5 sind in diesem Fall Schienen. Die Figur zeigt ein Ausführungsbeispiel für einen vierteiligen Zugabschnitt eines Schienenfahrzeugs. Dieses Fahrzeug 2 weist damit vier Wagen 8 auf. In diesem Ausführungsbeispiel ist die Hälfte der Räder angetrieben. Diese angetriebenen Räder sind als erste Räder 20 ausgebildet und jeweils mit einem ersten Motor 11 mechanisch verbunden. Bei den übrigen Rädern handelt es sich um nicht angetriebene Räder 24. Die Anzahl und Anordnung der angetrieben Achsen ist bei diesem Konzept frei wählbar. Der zentrale Umrichter 3 versorgt eine frequenzvariable und spannungsvariable Sammelschiene 22. Die Betriebsfrequenz der Sammelschiene 22 wird in vorteilhafter Weise abhängig von der Fahrgeschwindigkeit des Fahrzeugs 2 gesteuert oder geregelt. Die dreiphasige Läuferwicklung 16 der einzelnen Asynchronmotoren 11 ist über Schleifringe 13 jeweils an einen dezentralen Umrichter 4 angeschlossen, der über ein Bordnetz 26 des Fahrzeugs 2 versorgt werden. Das Bordnetz 26 kann darüber hinaus als weitere Sammelschiene, insbesondere als weitere DC Sammelschiene, beispielsweise mit einer Nominalspannung von 110 V, ausgebildet sein und direkt mit einer Batterie gekoppelt sein, um Energie speichern und bereitstellen zu können. Das Bordnetz 26 dient neben der Versorgung der dezentralen Umrichter 4 auch der Versorgung von weiteren elektrischen Verbrauchern, wie beispielsweise Beleuchtung oder Klimaanlagen, in den einzelnen Wagen 8 des Schienenfahrzeugs. Eine Versorgung der dezentralen Umrichter 4 aus dem Bordnetz 26, beispielsweise aus der weiteren 110 V DC Sammelschiene, ist möglich, da die nominelle Leistung der dezentralen Umrichter 4 nur wenige Prozent der Antriebsleistung beträgt.

Bei idealen elektrischen Antrieben 1 mit toleranzfreien ersten Rädern 20 an den angetrieben Achsen muss über die dezentralen Umrichter 4 nur eine Leistung bereitgestellt werden, die proportional vom Schlupf des Asynchronmotors 11 abhängt. Die Leistung lässt sich über das Produkt aus Schlupf multipliziert mit der elektrischen Leistung des Motors 11 berechnen oder zumindest abschätzen. Bei typischen Schlupffrequenzen liegt damit die Leistung der dezentralen Umrichter für toleranzfreie erste Räder 20 unter 1% der elektrischen Motorleistung. Berücksichtigt man die Toleranzen der ersten Räder 20, erhöht sich die Umrichterleistung der dezentralen Umrichter 4 zusätzlich gemäß der zugelassenen Raddurchmessertoleranzen. Die Leistungsabschätzung gilt unter der Annahme, dass der zentrale Umrichter 3 ideal mit der Fahrzeuggeschwindigkeit gesteuert wird und es zu keiner Abweichung zwischen der Frequenz der Sammelschienenspannung und der Fahrzeuggeschwindigkeit kommt.

Zur Vermeidung von Störbeeinflussungen beispielsweise durch hochfrequente, elektrische und/oder magnetische Felder und zur Reduzierung der Verlustleistung im Motor 11 sowie dessen Pendelmomente empfiehlt sich, die Sammelschiene 22 über ein Filter 7 mit dem zentralen Umrichtern 3 zu verbinden. Vorteilhafterweise wird dieses Filter 7 als Gegentakt- und/oder Gleichtaktfilter ausgeführt.

Die Energieversorgung des zentralen Umrichters 3 geschieht beispielsweise aus einem nicht dargestellten Fahrdraht mit Wechselspannung. Über einen Stromabnehmer 32 und einem Transformator 31 wird die elektrische Energie über einen Gleichrichter 30 in den dezentralen Umrichter 3 eingespeist. Bei einem Fahrdraht mit Gleichspannung kann der Transformator 31 und der Gleichrichter 30 entfallen.

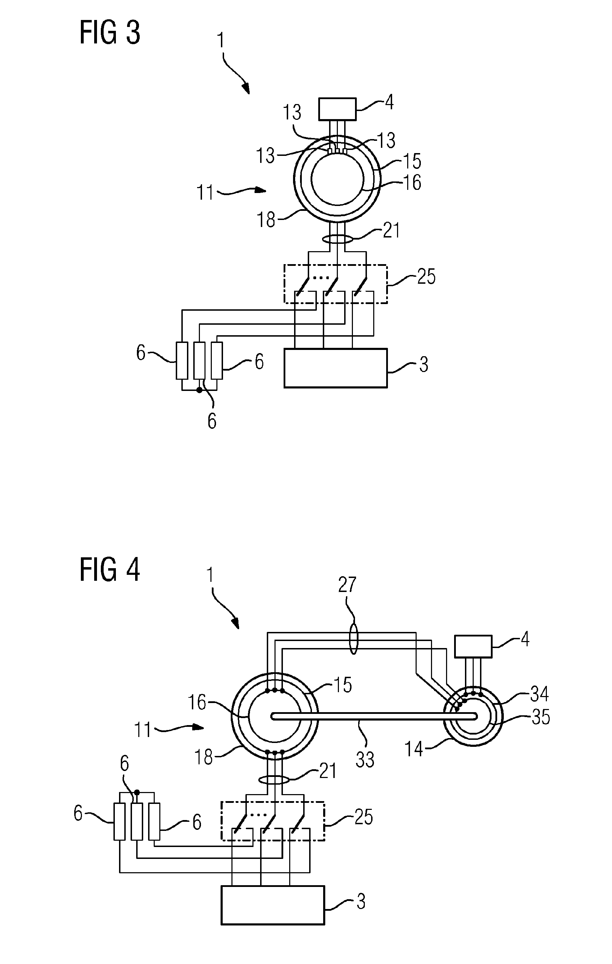

Die FIG 3 zeigt einen elektrischen Antrieb 1 mit einem Motor, der als erster Motor 11 ausgebildet ist. Zur Vermeidung von Wiederholungen wird auf die Beschreibung zu den Figuren 1 und 2 sowie auf die dort eingeführten Bezugszeichen verwiesen. Dieser elektrische Antrieb 1 eignet sich sowohl für den Einsatz in einem Fahrzeug 2, wie es im Ausführungsbeispiel der FIG 1 dargestellt ist, als auch für den Einsatz in einem Schienenfahrzeug, wie es im Ausführungsbeispiel der FIG 2 dargestellt ist. Der Motor 11 wird durch den zentralen Umrichter 3 und den dezentralen Umrichter 4 mit elektrischer Energie versorgt. Dabei ist der zentrale Umrichter 3 mittels einer elektrischen Verbindung 21 mit der Ständerwicklung 15 des ersten Motors 11 verbunden. Der dezentrale Umrichter 4 speist die Läuferwicklung 16 des ersten Motors 11. Da die Läuferwicklung 16 auf der Antriebswelle 17 des ersten Motors 11 angebracht ist und im Betrieb rotiert, werden die elektrischen Anschlüsse mittels Schleifringe 13 aus dem Inneren des ersten Motors 11 an das Gehäuse 18 des ersten Motors 11 herausgeführt. Von dort können die Anschlüsse mit dem dezentralen Umrichter 4 verbunden werden. In die elektrische Verbindung 21 zwischen ersten Motor 11 und zentralen Umrichter 3 ist in diesem Ausführungsbeispiel ein Schalter 25 eingebracht. Mit diesem Schalter 25 ist es möglich, die elektrische Verbindung 21 zwischen zentralem Umrichter 3 und erste Motor 11 zu trennen. Gleichzeitig kann die Ständerwicklung 15 mit einem dreiphasigen Widerstand 6 verbunden werden. Legt der dezentrale Umrichter 4 eine Spannung an die Läuferwicklung 16, so wird eine Spannung in der Ständerwicklung 15 induziert, die einen Stromfluss zwischen erstem Motor 11 und dreiphasigen Widerstand 6 bewirkt. Dadurch wird im ersten Motor 11 zuverlässig ein Bremsmoment erzeugt. Dieses Prinzip ist für mehrphasige Motoren mit einem Drehfeld, insbesondere für dreiphasige Motoren, durchführbar. Als besonders vorteilhaft hat sich diese Möglichkeit des Bremsens für Asynchronmotoren erwiesen. Für ein sicheres Bremsen ist die Funktion des zentralen Umrichters 3 nicht mehr zwingend erforderlich. Die erforderliche Redundanz für das sichere Bremsen wird über die Vielzahl (mindestens zwei) dezentraler Umrichter 4 erreicht. Damit kann auf einfache und kostengünstige Weise ein sicheres Bremsen des Schienenfahrzeugs mit hoher Redundanz sichergestellt werden.

Die FIG 4 zeigt einen elektrischen Antrieb 1 mit einem Motor, der als erster Motor 11 ausgebildet ist. Zur Vermeidung von Wiederholungen wird auf die Beschreibung zu den Figuren 1 bis 3 sowie auf die dort eingeführten Bezugszeichen verwiesen. Die Anordnung unterscheidet sich von der vorhergehenden Anordnung der FIG 3, dass auf die Verwendung von Schleifringen verzichtet werden kann. Anstelle der Schleifringe 13, die eine elektrische Verbindung zwischen dem feststehenden dezentralen Umrichter 4 und der rotierenden Läuferwicklung schaffen, wird eine Erregermaschine 14 eingesetzt. Der dezentrale Umrichter 4 speist die Ständerwicklung 34 der Erregermaschine 14. Die elektrische Energie wird mittels eines Drehfeldes auf die Läuferwicklung 35 der Erregermaschine 14 übertragen. Die Läuferwicklung 35 der Erregermaschine 14 ist starr mit dem ersten Motor 11 verbunden. Somit kann auf einfache Weise eine Verbindung zwischen Läuferwicklung 35 der Erregermaschine 14 und Läuferwicklung 16 des ersten Motors 11 hergestellt werden, da diese Wicklungen auch bei der Rotation des Motors 11 relativ zueinander keine Bewegung ausführen. Somit kann auch ohne Schleifringe eine Energieübertragung vom dezentralen Umrichter 4 zu der Läuferwicklung 16 des ersten Motors vorgenommen werden. Durch die Transformation des Drehspannungssystems, die durch die Erregermaschine erfolgt unterscheidet sich jedoch die Spannung des dezentralen Umrichters 4 im Vergleich zu einer Speisung über Schleifringe.

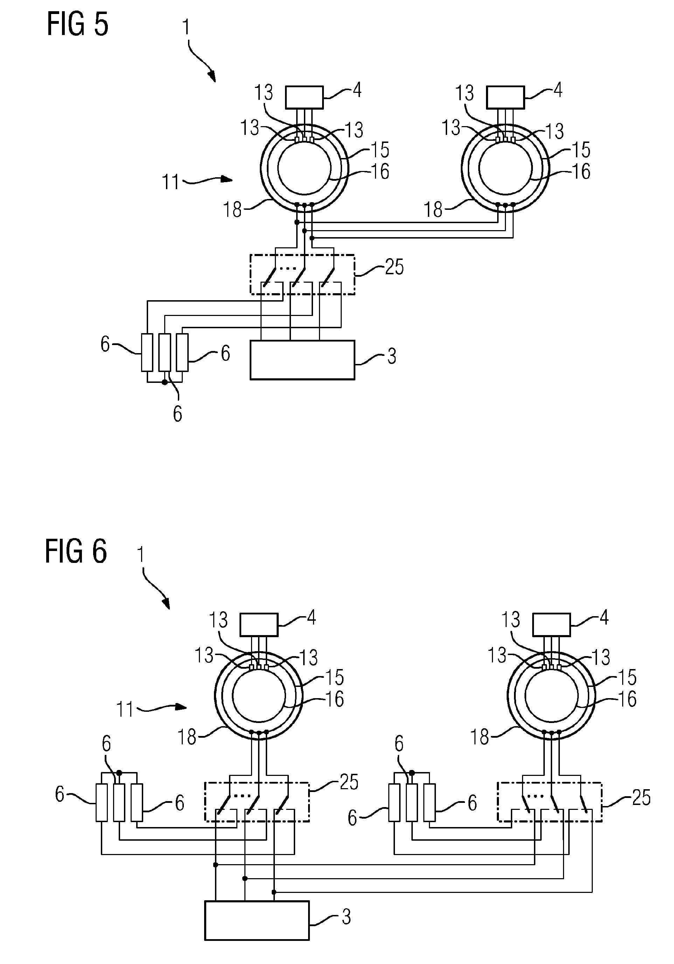

Die FIG 5 zeigt einen elektrischen Antrieb 1 mit zwei Motoren, die als erste Motoren 11 ausgebildet sind. Zur Vermeidung von Wiederholungen wird auf die Beschreibung zu den Figuren 1 bis 4 sowie auf die dort eingeführten Bezugszeichen verwiesen. Es ist dargestellt, wie die beiden ersten Motoren bezüglich ihrer Ständerwicklung 15 in einer Parallelschaltung angeordnet sind. Diese Anordnung ist auf beliebig viele erste Motoren 11 erweiterbar. Jeder der ersten Motoren verfügt über einen jeweiligen dezentralen Umrichter 4, der elektrisch über Schleifringe 13 mit der Läuferwicklung 16 des jeweiligen ersten Motors 11 verbunden ist. Auch in diesem Aufbau dient der Schalter 25 dazu, den dreiphasigen Widerstand 6 mit den Ständerwicklungen 15 der jeweiligen ersten Motoren 11 elektrisch zu verbinden. Das entstehende Bremsmoment kann mithilfe der dezentralen Umrichter 4 für jeden der ersten Motoren 11 unabhängig voneinander gesteuert oder geregelt werden. Bezüglich der Sicherheit, insbesondere der Redundanz, der Bremse wird auf die Beschreibung zur Figur 3 verwiesen.

Die FIG 6 zeigt einen weiteren elektrischen Antrieb 1 mit zwei Motoren, die als erste Motoren 11 ausgebildet sind. Zur Vermeidung von Wiederholungen wird auf die Beschreibung zu den Figuren 1 bis 4 sowie auf die dort eingeführten Bezugszeichen verwiesen. Bei dieser Anordnung speisen die ersten Motoren 11 jeweils einen eigenen Widerstand 6, der jeweils über einen Schalter 25 mit der jeweiligen Ständerwicklung 15 verbunden sind. Damit lässt sich der Bremsvorgang der einzelnen ersten Motoren 11 unabhängig voneinander steuern oder regeln. Eine Synchronisierung zwischen den ersten Motoren 11, die gemeinsam auf einen Widerstand 6 bremsen wie in der Anordnung der FIG 5, kann damit entfallen. Somit besitzt der Bremsvorgang der einzelnen ersten Motoren 11 eine hohe Redundanz, da ein Ausfall einer Komponente sich nicht auf das Bremsen eines der anderen ersten Motoren 11 auswirkt.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Zusammenfassend betrifft die Erfindung einen elektrischen Antrieb für ein Fahrzeug, mit mindestens zwei Motoren und einem zentralen Umrichter, wobei die Motoren jeweils eine Ständerwicklung, eine Läuferwicklung und eine Antriebswelle aufweisen, wobei die Antriebswellen der Motoren mechanisch über einen Fahrweg miteinander koppelbar sind, wobei der zentrale Umrichter mit den Ständerwicklungen der Motoren elektrisch verbunden ist. Zur Verbesserung des elektrischen Antriebs wird vorgeschlagen, den elektrischen Antrieb um mindestens einen dezentralen Umrichter zu ergänzen und den dezentralen Umrichter mit der Läuferwicklung eines ersten Motors der mindestens zwei Motoren elektrisch zu verbinden. Die Erfindung betrifft weiter ein Fahrzeug, insbesondere ein Schienenfahrzeug, mit einem solchen elektrischen Antrieb. Ferner betrifft die Erfindung ein Verfahren zum Betreiben eines solchen elektrischen Antriebs, wobei zur Steuerung oder Regelung des Momentes des ersten Motors mittels des dezentralen Umrichters, der mit dem ersten Motor elektrisch verbunden ist, eine Spannung an die Läuferwicklung des ersten Motors angelegt wird.

## Patentansprüche

1. Elektrischer Antrieb (1) für ein Fahrzeug (2), aufweisend:
- mindestens zwei Motoren (10,11),
- einen zentralen Umrichter (3),
- mindestens einen dezentralen Umrichter (4)
wobei die Motoren (10,11) jeweils eine Ständerwicklung (15), eine Läuferwicklung (16) und eine Antriebswelle (17) aufweisen, wobei die Antriebswellen (17) der Motoren (10,11) mechanisch über einen Fahrweg (5) miteinander koppelbar sind, wobei der zentrale Umrichter (3) mit den Ständerwicklungen (15) der Motoren (10,11) elektrisch verbunden ist, wobei der dezentrale Umrichter (4) mit der Läuferwicklung (16) eines ersten Motors (11) der mindestens zwei Motoren (10,11) elektrisch verbunden ist.

2. Elektrischer Antrieb (1) nach Anspruch 1, wobei die Ständerwicklungen (15) der Motoren (10,11) in einer Parallelschaltung angeordnet und mit dem zentralen Umrichter (3) elektrisch verbunden sind.

3. Elektrischer Antrieb (1) nach einem der Ansprüche 1 oder 2, wobei die Anzahl der dezentralen Umrichter (4) gleich der Anzahl der Motoren (10,11) ist, wobei die Motoren (10,11) des elektrischen Antriebs (1) derart als erste Motoren (11) ausgebildet sind, dass die Läuferwicklungen (16) der Motoren (10,11) jeweils mit einem der dezentralen Umrichter (4) verbunden sind.

4. Elektrischer Antrieb (1) nach einem der Ansprüche 1 bis 3, wobei zumindest der erste Motor (11) als Asynchronmotor (12) mit Schleifringläufer ausgebildet ist.

5. Elektrischer Antrieb (1) nach einem der Ansprüche 1 bis 3, wobei zumindest der erste Motor (11) als Asynchronmotor (12) ausgebildet ist, wobei die Läuferwicklungen (16) elektrisch mit einer Erregermaschine (14) verbunden sind, wobei die Erregermaschine (14) und der erste Motor (11) starr über eine Welle (33) oder ein Getriebe miteinander verbunden sind.

6. Elektrischer Antrieb (1) nach einem der Ansprüche 1 bis 5, wobei zum Bremsen des elektrischen Antriebs (1) die elektrische Verbindung (21) zwischen dem zentralen Umrichter (3) und dem ersten Motor (11) trennbar ist, wobei die Ständerwicklung (15) des ersten Motors (11) mit einem Widerstand (6) derart verbindbar ist, dass beim Anlegen einer Spannung mittels des dezentralen Stromrichters (4), der mit dem jeweiligen ersten Motor (11) verbunden ist, an die Läuferwicklung (16) des ersten Motors (11) ein Strom zwischen der Ständerwicklung (15) des ersten Motors (11) und dem Widerstand (6) fließt und ein Bremsmoment im ersten Motor (11) bewirkt.

7. Elektrischer Antrieb (1) nach einem der Ansprüche 1 bis 6, wobei der zentrale Umrichter (3) mit den Ständerwicklungen (15) der Motoren (10, 11) mittels einer Sammelschiene (22) verbunden ist, wobei zwischen dem zentralen Umrichter und der Sammelschiene (22) ein Filter (7), insbesondere ein Gegentakt- und/oder Gleichtaktfilter, angeordnet ist.

8. Elektrischer Antrieb (1) nach einem der Ansprüche 1 bis 7, wobei der dezentrale Umrichter (4) zur Versorgung mit elektrischer Energie mit einem Bordnetz (8), insbesondere einem Gleichspannungsbordnetz, des Fahrzeugs (2), insbesondere eines Schienenfahrzeugs, verbindbar ist.

9. Fahrzeug (2), insbesondere Schienenfahrzeug, mit einem elektrischen Antrieb (1) nach einem der Ansprüche 1 bis 8.

10. Verfahren zum Betreiben eines elektrischen Antriebs (1) nach einem der Ansprüche 1 bis 8, wobei zur Steuerung oder Regelung des Momentes des ersten Motors (11) mittels des dezentralen Umrichters (4), der mit dem ersten Motor (11) elektrisch verbunden ist, eine Spannung an die Läuferwicklung (16) des ersten Motors (11) angelegt wird.

11. Verfahren nach Anspruch 10, wobei der erste Motor (11) mit einem ersten Rad (20) des Fahrzeugs (2) verbunden ist, wobei die Steuerung oder Regelung des Momentes des ersten Motors (11) durch den dezentralen Umrichter (4) in Abhängigkeit von dem Radius des ersten Rades (20), das mit dem ersten Motor (11) verbunden ist, und/oder in Abhängigkeit eines Radschlupfes zwischen erstem Rad (20) und Fahrweg (5) erfolgt.

12. Verfahren nach einem der Ansprüche 10 oder 11, wobei der erste Motor (11) als Asynchronmotor (12) mit Schleifringläufern ausgebildet ist, wobei die an die Läuferwicklung (16) des Asynchronmotors (12) angelegte Spannung, insbesondere die Frequenz der Spannung, vom Schlupf des Asynchronmotors (12) abhängt.

13. Verfahren nach einem der Ansprüche 10 bis 12, wobei die Motoren (10,11) als erste Motoren (11) ausgebildet sind, wobei die Aufteilung des Gesamtmoments der Motoren (10,11) auf die jeweiligen Motoren (10,11) dadurch gesteuert oder geregelt wird, dass mittels der dezentralen Umrichter (4) jeweils eine Spannung an die Läuferwicklung (16) des mit dem jeweiligen dezentralen Umrichter (4) elektrisch verbundenen ersten Motors (11) angelegt wird.

14. Verfahren nach einem der Ansprüche 10 bis 13 zum Betreiben eines elektrischen Antriebs zumindest nach Anspruch 6, wobei zum Bremsen des elektrischen Antriebs (1) die elektrisch Verbindung (21) zwischen zentralem Umrichter (3) und dem ersten Motor (11) getrennt wird, wobei die Ständerwicklung des ersten Motors mit dem Widerstand (6) elektrisch verbunden wird, wobei der dezentrale Umrichter (4) jeweils an die Läuferwicklung (16) des ersten Motors (11) derart eine Spannung anlegt, dass ein Strom zwischen der Ständerwicklung (15) des ersten Motors (11) und dem Widerstand (6) fließt.
